(19) **Europäisches Patentamt / European Patent Office / Office européen des brevets**

(11) **EP 1 939 240 B1**

(12) **EUROPEAN PATENT SPECIFICATION**

(45) Date of publication and mention of the grant of the patent:
**31.07.2013 Bulletin 2013/31**

(21) Application number: **06811853.8**

(22) Date of filing: **16.10.2006**

(51) Int Cl.:
*C08J 9/00* (2006.01)    *C08L 101/16* (2006.01)
*B29C 55/00* (2006.01)   *B29C 67/20* (2006.01)
*C08K 3/00* (2006.01)    *C08J 5/18* (2006.01)
*C08L 67/04* (2006.01)   *B29K 105/04* (2006.01)
*B29K 105/16* (2006.01)  *B29K 105/00* (2006.01)

(86) International application number:
**PCT/JP2006/320598**

(87) International publication number:
**WO 2007/046342 (26.04.2007 Gazette 2007/17)**

(54) **POROUS SHEET**

PORÖSES FLÄCHENGEBILDE

FEUILLE POREUSE

(84) Designated Contracting States:
**DE FR GB SE**

(30) Priority: **19.10.2005 JP 2005304352**

(43) Date of publication of application:
**02.07.2008 Bulletin 2008/27**

(73) Proprietor: **Kao Corporation**
**Chuo-ku**
**Tokyo 103-8210 (JP)**

(72) Inventors:
- **MIMURA, Koji**
  **Haga-gun**
  **Tochigi 321-3497 (JP)**
- **NODA, Akira**
  **Haga-gun**
  **Tochigi 321-3497 (JP)**

- **NAKANO, Yukihiro**
  **Haga-gun**
  **Tochigi 321-3497 (JP)**
- **MORI, Atsuhito**
  **Wakayama-shi**
  **Wakayama 640-8404 (JP)**

(74) Representative: **Vossius & Partner**
**Siebertstrasse 4**
**81675 München (DE)**

(56) References cited:
**JP-A- 05 247 245     JP-A- 08 027 296**
**JP-A- 2002 146 170   JP-A- 2004 149 679**

- **DATABASE WPI Week 199614 Thomson Scientific, London, GB; AN 1996-136426 XP002674437, -& JP 8 027296 A (MITSUI TOATSU CHEM INC) 30 January 1996 (1996-01-30)**

**Description**

Technical Field

The present invention relates to a porous sheet.

Background Art

In the field of absorbent articles such as disposable diapers and sanitary napkins, liquid impermeable, water vapor (moisture) permeable, porous sheets made of thermoplastic resins are widely used as a back sheet for the prevention of overhydration during wear. Porous sheets or films of this type are obtained by melt-casting a resin composition mainly comprising a thermoplastic resin and an inorganic filler by T-die extrusion or blown-film extrusion into film and uni- or biaxially stretching the film to form interconnecting pores, through which moisture can pass. Generally, polyolefin resins such as polyethylene are employed as the thermoplastic resin to make such porous sheets in view of their good castability into film or sheet and good strength and softness of the resulting film or sheet.

In recent years, use of resins of plant origin and biodegradable resins has been attracting attention to reduce emission of carbon dioxide in the fight against global warming and to conserve the environment. Although an aliphatic polyester resin is known as a resin of plant origin and/or a biodegradable resin, such an aliphatic polyester resin, e.g., a polylactic acid resin has a disadvantage of poor softness when used as a material of porous sheets for the above described applications.

Known porous sheets comprising an aliphatic polyester resin include the one described in Patent Document 1, which comprises an aliphatic polyester resin and an inorganic filler, has a network structure containing continuous pores with the maximum pore diameter of $5\mu$m or smaller and a void of 10% to 70%, and has the molecules oriented by stretching.

Patent Document 2 proposes a porous film produced by adding a pulverized filler to a polylactic acid resin composition containing polylactic acid or a lactic acid-hydroxycarboxylic acid copolymer and a plasticizer, melt-casting the resulting mixture into film, and stretching the film at least uniaxially.

Patent Document 1: JP 5-209073A
Patent Document 2: JP 5-247245A

Disclosure of the Invention

The porous film of Patent Document 1 does not provide a solution to the poor softness problem.

The technique of Patent Document 2 uses a plasticizer but still leaves room for improvement in terms of processing properties on casting into sheet in T-die extrusion or blown-film extrusion, fine pore forming properties by stretching, and softness of the resulting sheet.

The present invention provides a porous sheet obtained by melt-casting a resin composition containing an aliphatic polyester resin, a filler, and a plasticizer into sheet and stretching the sheet at least uniaxially. The filler is present in an amount of 20 to 300 parts by weight per 100 parts by weight of the aliphatic polyester resin. The plasticizer is a compound having two or more ester groups per molecule and 3 to 9 moles of ethylene oxide per molecule as an average addition mole number; and the plasticizer is present in an amount of 1 to 100 parts by weight per 100 parts by weight of the aliphatic polyester resin.

Detailed Description of the Invention

The present invention relates to a porous sheet which is prepared from an aliphatic polyester resin with good processing properties on casting into sheet and good pore forming properties in stretching and which has excellent softness.

The present invention will be described based on its preferred embodiments.

The porous sheet of the present invention is prepared from a resin composition containing an aliphatic polyester resin, a filler, and a plasticizer.

The aliphatic polyester resins that can be used in the invention include known polyester resins having not more than 50%, preferably 20% or less, more preferably 0%, of a comonomer containing an aromatic ring in view of environmental burden. As used herein, the term "0% of a comonomer" means that the aliphatic polyester resin has no aromatic monomer copolymerized. Examples of preferred aliphatic polyester resins include polyhydroxyalkanoates such as polyhydroxybutyrate, polyhydroxyvalerate, and polyhydroxyhexanoate, polylactic acid resins, polycaprolactone, polybutylene succinate, polybutylene succinate/adipate, polyethylene succinate, polymalic acid, polyglycolic acid, polydioxanone, and poly(2-oxetanone).

The aliphatic polyester resin is preferably biodegradable to lessen the burden on the natural environment and contribute to the environmental conservation. Biodegradable aliphatic polyester resins are exemplified by the above recited examples of the aliphatic polyester resins. A "biodegradable resin" is a resin capable of being broken down into low molecular compounds by the action of microorganisms in the nature. It has biodegradability as defined, e.g., in JIS K6953 (ISO 14855) "Determination of the ultimate aerobic biodegradability and disintegration of plastic materials under controlled composting conditions-Method by analysis of evolved carbon dioxide".

It is also preferred that the aliphatic polyester resin be of plant origin to reduce the total emission of carbon dioxide inclusive of the carbon dioxide emitted during the resin production. Examples of aliphatic polyester resins of plant origin include the above recited polyhydroxyalkanoates, polylactic acid resins, polycarprolactone, and polybutylene succinate.

Among the resins recited preferred are polylactic acid resins in terms of processability, cost economy, large volume availability, and physical properties. The term "polylactic acid resins" as used herein is meant to include polylactic acid and lactic acid-hydroxycarboxylic acid copolymers. Examples of the hydroxycarboxylic acid include glycolic acid, hydroxybutyric acid, hydroxyvaleric acid, hydroxypentanoic acid, hydroxycaproic acid, and hydroxyheptanoic acid, with glycolic acid and hydroxycaproic acid being preferred. Preferred polylactic acid has a molecular structure composed of 20 to 100 mol% of a unit derived from L- or D-lactic acid and 0 to 80 mol% of a unit derived from the corresponding antipode. The lactic acid-hydroxycarboxylic acid copolymer comprises 70 to 100 mol% of a unit derived from L-lactic acid and/or D-lactic acid and 0 to 30 mol% of a hydroxycarboxylic acid unit. These polylactic acid resins are obtained by dehydrating polycondensation of a starting compound(s) selected from L-lactic acid, D-lactic acid, and hydroxycarboxylic acids according to the molecular design. Preferably the polylactic acid resin is obtained by ring-opening polymerization of a starting compound(s) selected from a lactide (a cyclic dimer of lactic acid), a glycolide (a cyclic dimer of glycolic acid), caprolactone, and the like according to the molecular design. The term "lactide" includes L-lactide, i.e., a cyclic dimer of L-lactic acid, D-lactide, i.e., a cyclic dimer of D-lactic acid, meso-lactide, i.e., a cyclic dimer formed between D-lactic acid and L-lactic acid, and DL-lactide, i.e., a racemic mixture of D- and L-lactides. While any of them can be used in the invention, it is preferred to use D-lactide or L-lactide as a main starting material.

Examples of commercially available polylactic acid resins include LACEA (trade name) from Mitsui Chemicals, Inc. and Nature Works (trade name) from Cargill Dow Polymers.

The above described various aliphatic polyester resins may be used either individually or as a combination of two or more thereof.

A preferred amount of the aliphatic polyester resin in the resin composition that can be used in the present invention is 40% by weight or more, more preferably 70% by weight or more, even more preferably 100% by weight, to accomplish the object of the invention.

The filler is used in the present invention for the purpose of rendering the sheet porous and moisture permeable. While organic fillers such as polystyrene beads may be usable, it is preferred to use inorganic fillers.

Examples of useful inorganic fillers include calcium carbonate, gypsum, talc, clay, kaolin, silica, diatomaceous earth, magnesium carbonate, barium carbonate, magnesium sulfate, barium sulfate, calcium phosphate, aluminum hydroxide, zinc oxide, titanium oxide, alumina, mica, zeolite, carbon black, aluminum powder, iron powder, and like powders. Preferred of them are calcium carbonate and barium sulfate. Calcium carbonate is particularly preferred.

The fillers recited can be used either individually or as a combination of two or more thereof.

The inorganic filler preferably has an average particle size of 0.1 to 20 $\mu$m and a maximum particle size of 100 $\mu$m or smaller to secure the strength of the resulting porous sheet and prevent the sheet from tearing during its production. More preferably, the average particle size is 0.3 to 5 $\mu$m, and the maximum particle size is 50 $\mu$m or smaller. When in using calcium carbonate as a filler, calcium carbonate having a specific surface area of 300 to 100,000 $cm^2$/g, preferably 2,000 to 60,000 $cm^2$/g, is preferred for obtaining a highly moisture-permeable and water-resistant sheet, i.e., a sheet which has a large number of densely packed open pores thereby to hardly allow a fluid to spread or penetrate and has sufficient strength.

The amount of the filler in the resin composition is 20 to 300 parts, preferably 50 to 230 parts, more preferably 80 to 180 parts, by weight per 100 parts by weight of the aliphatic polyester resin. If it is less than 20 parts by weight, the resulting sheet has insufficient moisture permeability. If it is more than 300 parts by weight, the sheet has reduced water resistance, allowing a fluid to penetrate, and has reduced strength.

The plasticizer that can be used in the present invention is a compound having at least two ester groups and an average of 3 to 9 moles of ethylene oxide added per molecule.

Using the above specified plasticizer provides excellent processing properties in casting into sheet, fine pore forming properties on stretching, and sheet softness.

While the mechanism by which the specific plasticizer brings about the effects of the invention has not been elucidated, a plasticizer which has two or more ester groups per molecule and a polyoxyethylene chain with an average of 3 to 9 moles of ethylene oxide per molecule, which preferably further has a methyl group, more preferably two or more methyl groups, exhibits higher heat resistance and compatibility to an aliphatic polyester resin than one which does not. Therefore, the plasticizer easily dissolves in the aliphatic polyester resin to bring softness to the fullest extent. A sheet of the resin with the thus improved softness is prevented from necking when stretched to form pores, so that the stretch stress is evenly exerted throughout the sheet thereby forming uniform pores.

The plasticizer for use in the invention is preferably at least one member selected from the group consisting of an ester of succinic or adipic acid and a polyethylene glycol monomethyl ether and an ester of acetic acid and a glycerol-ethylene oxide adduct or an ethylene glycol-ethylene oxide adduct.

The plasticizer that can be used in the invention preferably has an average molecular weight of 250 to 700, more preferably 300 to 600, even more preferably 350 to 550, most preferably 400 to 500, in terms of bleed resistance and volatilization resistance. The average molecular weight is calculated from the following formula, in which the saponification value is obtained by the method specified in JIS K0070. Average molecular weight = 56108 x (number of ester groups)/saponification value

In terms of processing properties in casting into sheet, pore forming properties, and softness of the porous sheet, more preferred plasticizers for use in the invention are polyhydric alcohol alkyl ether esters, such as an ester of acetic acid and a glycerol-ethylene oxide (EO) adduct with an average of 3 to 9 moles of EO and an ester of acetic acid and a polyethylene glycol having an average of 4 to 9 moles of EO; and esters between polycarboxylic acids and polyethylene glycol monomethyl ethers, such as an ester of succinic acid and a polyethylene glycol monomethyl ether having an average of 2 to 4 moles of EO, an ester of adipic acid and a polyethylene glycol monomethyl ether having an average of 2 to 3 moles of EO, and an ester of 1,3,6-hexanetricarboxylic acid and a polyethylene glycol monomethyl ether having an average of 2 to 3 moles of EO. In view of processing properties in casting into sheet, pore forming properties, softness of the porous sheet, and bleed resistance of the plasticizer, even more preferred plasticizers are an acetic acid ester of a glycerol-EO adduct having an average of 3 to 6 moles of EO, an acetic acid ester of a polyethylene glycol with an average of 4 to 6 moles of EO, a succinic acid ester of a polyethylene glycol monomethyl ether with an average of 2 to 3 moles of EO, diethylene glycol monomethyl ether adipate, and diethylene glycol monomethyl ether 1,3,6-hexanetricarboxylate. Triethylene glycol monomethyl ether succinate is particularly preferred in view of processing properties in casting into sheet, pore forming properties, and softness of the porous sheet, and because of its bleed resistance, volatilization resistance and not giving off irritating odor. The ester used as a plasticizer is preferably a completely esterified compound to fulfill its full function as a plasticizer.

The amount of the plasticizer in the resin composition is 1 to 100 parts, preferably 2 to 70 parts, more preferably 5 to 30 parts, by weight per 100 parts by weight of the aliphatic polyester resin. If it is less than 1 part by weight, the softness is insufficient. If it is more than 100 parts by weight, the resin composition has poor processing properties in casting into sheet, and the resulting sheet has reduced strength.

If desired, the resin composition that can be used in the invention may contain third components including a dispersing agent, a crystalline nucleus agent, and a hydrolysis inhibitor, in addition to the aliphatic polyester resin, filler, and plasticizer.

A dispersing agent can be used to improve the dispersibility of the filler in the resin composition. Fatty acids having 10 to 30 carbon atoms can be used, for example. Stearic acid, for example, is preferably added in an amount of 0.1 to 30 parts, more preferably 0.5 to 10 parts, by weight per 100 parts by weight of the filler.

A crystalline nucleus agent can be used to control the crystallinity and crystal size of the resin. Organic crystalline nucleus agents and/or inorganic ones are usable. The organic crystalline nucleus agents are preferably compounds containing a hydroxyl group and an amide group in the molecule thereof, more preferably aliphatic compounds with more than two hydroxyl group and more than two amide group per molecule.

Examples of the organic crystalline nucleus agents include hydroxy fatty acid monoamides, such as 12-hydroxystearic acid monoethanolamide, and hydroxy fatty acid bisamides, such as methylenebis(12-hydroxystearamide), ethylenebis(12-hydroxy-stearamide), and hexamethylenebis(12-hydroxystearamide). Ethylenebis(12-hydroxy-stearamide) and hexamethylenebis(12-hydroxystearamide) are preferred.

Examples of the inorganic crystalline nucleus agents include inorganic compounds such as silicates (e.g., talc, smectite, kaolin, mica, and montmorillonite), silica, and magnesium oxide. The inorganic compounds preferably have an average particle size of 0.1 to 20 μm, more preferably 0.1 to 10 μm, for dispersibility. Of the inorganic compounds preferred are silicates, particularly talc.

The amount of the crystalline nucleus agent is preferably 0.05 to 7 parts by weight, more preferably 0.1 to 4 parts by weight, per 100 parts by weight of the aliphatic polyester resin.

The hydrolysis inhibitor is added to inhibit molecular weight reduction due to hydrolysis during casting (sheet formation). For example, carbodiimide compounds including polycarbodiimide compounds and monocarbodiimide compounds can be used as a hydrolysis inhibitor. Examples of the polycarbodiimide compounds include poly(4,4'-diphenylmethanecarbodiimide), poly(4,4'-dicyclohexylmethanecarbodi-imide), poly(1,3,5-triisopropylbenzene)polycarbodiimide, and poly(1,3,5-triisopropylbenzene/1,5-diisopropylbenzene)polycarbodiimide. Examples of the monocarbodiimide compounds include N,N'-di-2,6-diisopropylphenylcarbodiimide.

The amount of the hydrolysis inhibitor is preferably 0.1 to 15 parts by weight, more preferably 0.2 to 8 parts by weight, per 100 parts by weight of the aliphatic polyester resin.

The dispersing agents, the crystalline nucleus agents, and the hydrolysis inhibitors recited above can be used either individually or as a combination of two or more thereof, respectively.

As long as the effects of the invention are not impaired, the resin composition may contain components other than those described, such as antistatics, anti-fogging agents, photo stabilizers, ultraviolet absorbers, pigments, inorganic fillers, mildew-proofing agents, antibacterial agents, blowing agents, and flame retardants.

The porous sheet of the present invention is obtained by melt casting the above described resin composition into sheet and then stretching the sheet at least uniaxially.

The porous sheet of the invention is efficiently produced by, for example, the following process. The components of the resin composition are preliminarily blended in, e.g., a Henschel mixer or a super mixer and kneaded and pelletized in a single or a twin screw extruder. The pellets are cast into sheet (unstretched sheet) by means of a casting machine such as a T-die extruder or a blown-film extruder. A T-die extruder is preferably used.

The resulting sheet (unstretched) is then stretched uniaxially or biaxially to cause interfacial separation between the resin and the filler, whereby the sheet is made porous. Stretching is carried out by means of, for example, stretching rolls or a tenter. The porous sheet of the invention is thus obtained. The film is preferably stretched 1.1 or more times, more preferably 1.5 to 5 times, its original length in at least one direction. The areal stretch ratio is preferably 1.1 or more, more preferably 1.3 to 4.

The porous sheet of the present invention can have a basis weight of about 5 to 100 $g/m^2$ and a thickness of about 4 to 90 $\mu m$.

Industrial Applicability

The present invention provides a porous sheet of an aliphatic polyester resin which is produced with excellent processing properties in casting into sheet and excellent pore forming properties on stretching and which has excellent softness and storage stability.

The porous sheet of the invention is useful as, for example, hygienic materials, medical materials, and clothing materials. The porous sheet of the invention can be laminated on one side with a fibrous sheet such as nonwoven fabric to make a composite sheet for use in the applications just described. In particular, where applied as a member constituting absorbent articles such as disposable diapers, sanitary napkins, panty liners, and incontinence pads, the porous sheet of the invention, which has moisture permeability as stated, either alone or in the form of the composite sheet with a fibrous sheet is capable of preventing humidity increase inside the article while worn thereby to protect the wearer's skin from irritation and rash effectively. These absorbent articles generally include a liquid permeable topsheet, a liquid impermeable (or hardly permeable) backsheet, and a liquid retentive absorbent member interposed therebetween. The porous sheet of the invention or the composite sheet composed of the porous sheet and a fibrous sheet is preferably used as the backsheet. The composite sheet composed of the porous sheet and a fibrous sheet also finds use as a material of a member other than the backsheet of the absorbent article, for example, as a material of standing cuffs or a waist barrier sheet.

Examples

Unless otherwise noted, all the parts are given by weight in Examples (including Tables) hereinafter given.

Examples 1 and 2 and Comparative Examples 1 to 3

(1) Preparation of resin composition

Components shown in Table 1 below were compounded in the ratio shown in Table 2 below and preliminarily mixed in a Henschel mixer (250 rpm, 60°C). The mixture was melt-kneaded and pelletized by means of a twin screw extruder with its head temperature controlled at 180°C.

(2) Production of porous sheet

The resulting resin composition was melt extruded into 70 $\mu m$ thick and 300 mm wide film by use of a T-die extruder having a 50 mm diameter single screw (L/D=28) and a T-die with a width of 500 mm and a die lip clearance of 1.5 mm. The T-die temperature was set at 170°C. The extrusion speed was 8 m/min. The resulting film was stretched 2.1 times the original length on a unidirectional stretching roll machine to obtain a porous sheet. The preheating temperature, stretching temperature, and annealing temperature were 80°C, 70°C, and 80°C, respectively.

Table 1

| Aliphatic polyester resin | A | Polylactic acid resin | LACEA H-400 from Mitsui Chemicals, Inc. |
|---|---|---|---|
| Filler | B | Calcium carbonate | Escalon #2000 from Sankyo Seifun Co., Ltd. |
| Plasticizer | C-1 | Diester of succinic acid and triethylene glycol monomethyl ether | |
| | C-2 | Acetic acid ester of glycerol-EO (6 moles) adduct | |
| | C-3 | Lactic acid oligomer (polymerization degree: 2.8) | The plasticizer used in Patent Document 2 |
| | C-4 | Adipic acid ester | DAIFATTY-101 from Daihachi Chemical Industry Co., Ltd. |
| Dispersing agent | D | Stearic acid | LUNAC from Kao Corp. |
| Hydrolysis inhibitor | E | Polycarbodiimide | Carbodilite LA-1 from Nisshinbo Industries, Inc. |

Table 2

| | Aliphatic Polyester Resin | | Filler | | Plasticizer | | Dispersing Agent | | Hydrolysis Inhibitor | |
|---|---|---|---|---|---|---|---|---|---|---|
| | Kind | Amount (part) | Kind | Amount (part) | Kind | Amount (part) | Kind | Amount (part) | Kind | Amount (part) |
| Example 1 | A | 100 | B | 150 | C-1 | 25 | D | 10 | E | 1 |
| Example 2 | A | 100 | B | 150 | C-2 | 25 | D | 10 | E | 1 |
| Comp. Example 1 | A | 100 | B | 150 | - | 0 | D | 10 | E | 1 |
| Comp. Example 2 | A | 100 | B | 150 | C-3 | 25 | D | 10 | E | 1 |
| Comp. Example 3 | A | 100 | B | 150 | C-4 | 25 | D | 10 | E | 1 |

Performance Evaluation

The porous sheets obtained in Examples 1 and 2 and Comparative Examples 1 and 2 were evaluated for (1) softness and (3) moisture permeability in accordance with the following methods. (2) The stretching processability in the production of these porous sheets was also evaluated as follows.

(1) Softness

Ten panel members were asked whether the porous sheet felt soft to the touch. The softness of the porous sheet was rated as follows according to the number of the panel members who answered the porous sheet felt soft.

A: 10 (all)
B: 7 to 9
C: 4 to 6
D: 3 or less

(2) Stretching processability

Vertical and horizontal line were drawn on the extruded sheet (unstretched sheet) to make five rows and fives columns of 5 cm-side squares. After the film was stretched 2.1 times at 70°C, the area of each square was measured. The stretching processability was rated based on the ratio of the minimum square area to the maximum square area as follows.

A: 90% to 100%
B: 80% to 90%
C: 70% to 80%
D: 60% to 70%

(3) Moisture permeability

The moisture permeability of the porous sheet was evaluated in terms of water vapor transmission rate measured in accordance with JIS Z0208, except that the measurement was taken at 30°C and 90% RH, and rated as follows.

A: More than 2.0 g/100 cm$^2$·hr
B: 1.8 to 2. 0 g/100 cm$^2$·hr
C: 1.6 to 1.8 g/100 cm$^2$·hr
D: Less than 1.6 cm$^2$·hr

In the above-described evaluations, the ratings A and B are "effective level".

The porous sheets of Example 1 and Comparative Example 3 were evaluated for storage stability as follows. The results are shown in Table 4.

(4) Storage stability

The porous sheet (moisture permeable sheet) was put in a glass petri dish and left to stand in a thermostat at 80°C for 12 hours. The porous sheet thus stored was observed with the naked eye for any change of the surface condition and graded "good" (no bleed) or "bad" (bleed). Furthermore, the porous sheet was weighed before and after the storage to calculate a weight loss (%) according to formula

$$\text{Weight loss (\%)} = [(\text{weight before storage} - \text{weight after storage})/\text{weight before storage}] \times 100$$

Table 3

|  | (1) Softness | (2) Pore Forming Properties on Stretching | (3) Moisture Permeability |
|---|---|---|---|
| Example 1 | A | A | A |
| Example 2 | B | B | B |
| Comp. Example 1 | D | D | B |
| Comp. Example 2 | C | B | B |

Table 4

|  | (4) Storage Stability | |
|---|---|---|
|  | Surface Condition | Weight Loss (%) |
| Example 1 | good | 0 |
| Comp. Example 1 | bad | 0.1 |

The results in Tables 3 and 4 prove the superiority of the porous sheets of the invention in softness, processability and storage stability. In contrast, Comparative Example 1 where no plasticizer is used is found inferior in softness and processability. Comparative Example 2 in which a lactic acid oligomer is used as a plasticizer has insufficient softness. Comparative Example 3 using a commercially available plasticizer has insufficient storage stability.

**Claims**

1. A porous sheet obtained by melt-casting a resin composition comprising an aliphatic polyester resin, a filler, and a plasticizer into sheet and stretching the sheet at least uniaxially, wherein
the filler the amount of is 20 to 300 parts by weight per 100 parts by weight of the aliphatic polyester resin,
the plasticizer is a compound having two or more ester groups per molecule and 3 to 9 moles of ethylene oxide per molecule as an average addition mole number, and
the plasticizer the amount of is to 100 parts by weight per 100 parts by weight of the aliphatic polyester resin.

2. The porous sheet according to claim 1, wherein the plasticizer is at least one member selected from the group consisting of an ester of succinic or adipic acid and a polyethylene glycol monomethyl ether and an ester of acetic acid and an ethylene oxide adduct of glycerol or ethylene glycol.

3. The porous sheet according to claim 1 or 2, wherein the aliphatic polyester resin is biodegradable.

4. The porous sheet according to any one of claims 1 to 3, wherein the aliphatic polyester resin is of plant origin.

5. The porous sheet according to claim 3 or 4, wherein the aliphatic polyester resin is a polylactic acid resin.

**Patentansprüche**

1. Ein poröses Flächengebilde, erhalten durch Schmelzgießen einer Harzzusammensetzung, umfassend ein aliphatisches Polyesterharz, einen Füllstoff und einen Weichmacher, in ein Flächengebilde und mindestens einachsiges Dehnen des Flächengebildes, wobei der Gehalt an Füllstoff 20 bis 300 Gewichtsteile, bezogen auf 100 Gewichtsteile des aliphatischen Polyesterharzes, beträgt,
der Weichmacher eine Verbindung mit zwei oder mehr Esterresten pro Molekül und 3 bis 9 Mol Ethylenoxid pro Molekül als eine durchschnittliche Additionsmolzahl ist und der Gehalt an Weichmacher 1 bis 100 Gewichtsteile, bezogen auf 100 Gewichtsteile des aliphatischen Polyesterharzes, beträgt.

2. Das poröse Flächengebilde gemäß Anspruch 1, wobei der Weichmacher mindestens ein Element, ausgewählt aus der Gruppe bestehend aus einem Ester aus Bernsteinsäure oder Adipinsäure und einem Polyethylenglycolmonomethylether und einem Ester aus Essigsäure und einem Ethylenoxid-Addukt mit Glycerin oder Ethylenglycol, ist.

3. Das poröse Flächengebilde gemäß Anspruch 1 oder 2, wobei das aliphatische Polyesterharz biologisch abbaubar ist.

4. Das poröse Flächengebilde gemäß einem der Ansprüche 1 bis 3, wobei das aliphatische Polyesterharz pflanzlichen Ursprungs ist.

5. Das poröse Flächengebilde gemäß Anspruch 3 oder 4, wobei das aliphatische Polyesterharz ein Polymilchsäureharz ist.

**Revendications**

1. Feuille poreuse obtenue par la coulée par fusion d'une composition résineuse comprenant une résine de polyester aliphatique, un agent de remplissage et un plastifiant en une feuille et par l'étirement de la feuille au moins de manière uniaxiale, dans laquelle
   la quantité de l'agent de remplissage est comprise entre 20 et 300 parts en poids pour 100 parts en poids de la résine de polyester aliphatique,
   le plastifiant est un composé comportant deux, ou plus, groupes ester par molécule et de 3 à 9 moles d'oxyde d'éthylène par molécule en tant que nombre molaire moyen d'addition, et
   la quantité du plastifiant est comprise entre 1 et 100 parts en poids pour 100 parts en poids de la résine de polyester aliphatique.

2. Feuille poreuse selon la revendication 1, dans laquelle le plastifiant est au moins un élément choisi dans le groupe constitué d'un ester d'acide succinique ou adipique et d'un éther monoéthylique de polyéthylène glycol et d'un ester d'acide acétique et d'un produit d'addition d'oxyde d'éthylène de glycérol ou d'éthylène glycol.

3. Feuille poreuse selon la revendication 1 ou 2, dans laquelle la résine de polyester aliphatique est biodégradable.

4. Feuille poreuse selon l'une quelconque des revendications 1 à 3, dans laquelle la résine de polyester aliphatique est d'origine végétale.

5. Feuille poreuse selon la revendication 3 ou 4, dans laquelle la résine de polyester aliphatique est une résine d'acide polylactique.

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 5209073 A

- JP 5247245 A